# EUROPÄISCHE PATENTSCHRIFT

(11) **EP 3 584 892 B1**
(45) Veröffentlichungstag und Bekanntmachung des Hinweises auf die Patenterteilung: **11.10.2023**
(21) Anmeldenummer: 19178330.7
(22) Anmeldetag: 05.06.2019
(51) Int. Cl.: H01R 43/16, H01R 43/02

(54) **VERFAHREN ZUR HERSTELLUNG VON KONTAKTELEMENTEN AUS EINEM ENDLOS-KONTAKTBAND UND ENTSPRECHENDE HERSTELLUNGSVORRICHTUNG**
METHOD FOR THE PREPARATION OF CONTACT ELEMENTS FROM AN ENDLESS CONTACT STRIP AND CORRESPONDING MANUFACTURING DEVICE
PROCÉDÉ DE FABRICATION D'ÉLÉMENTS DE CONTACT À PARTIR D'UNE BANDE DE CONTACT CONTINUE ET DISPOSITIF DE FABRICATION CORRESPONDANT

(30) Priorität: 18.06.2018 DE 102018209829; 15.03.2019 DE 102019203588
(43) Veröffentlichungstag der Anmeldung: 25.12.2019
(73) Patentinhaber: Weldomat GmbH, 87663 Lengenwang (DE)
(72) Erfinder: Riner, Daniel, 87663 Lengenwang (DE)
(74) Vertreter: Rau, Schneck & Hübner Patentanwälte Rechtsanwälte PartGmbB

(56) Entgegenhaltungen:
- EP-A1- 0 084 919
- US-A- 3 974 954

## Beschreibung

Die Erfindung betrifft ein Verfahren zur Herstellung von Kontaktelementen für elektrische Kontakte aus einem Endlos-Kontaktband sowie eine Vorrichtung zur Herstellung von Kontaktelementen nach einem solchen Verfahren.

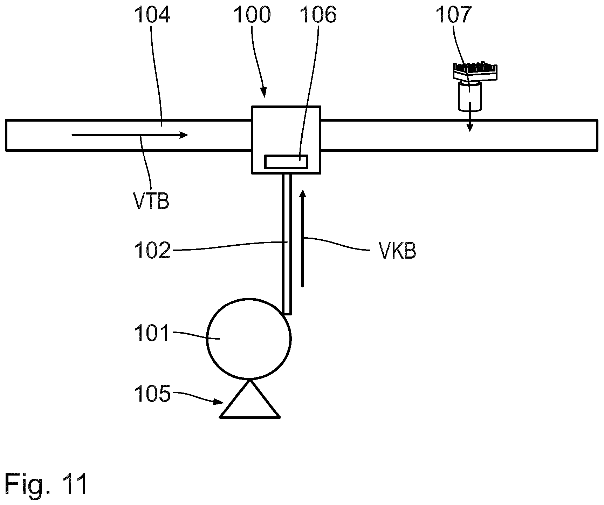

Zum Hintergrund der Erfindung und bekannten Stand der Technik ist auf die Fig. 11 bis 14 zu verweisen. Wie in der schematischen Darstellung einer bekannten Herstellungsvorrichtung gemäß Fig. 11 deutlich wird, dient eine sogenannte Kontakt-Schweißstation 100 dazu, von einer Typenspezifischen Vorratsrolle 101 eines Kontaktbandes 102A, 102B, 102C einzelne Kontaktelemente 103A, 103B, 103C abzulängen und auf ein Trägerband 104 als Einzelkontakte aufzuschweißen. Dazu wird die entsprechende Vorratsrolle 101 in eine Abhaspelvorrichtung 105 eingesetzt, das jeweilige Kontaktband 102A, 102B oder 102C davon abgezogen und in Vorschubrichtung VKB der Kontakt-Schweißstation 100 zugeführt. Dort werden in einer Schneidvorrichtung 106 die jeweiligen einzelnen Kontaktelemente 103A, 103B oder 103C vom Band abgeschnitten und auf dem Trägerband 104 befestigt. In Vorschubrichtung VTB des Trägerbands 104 nach der Kontakt-Schweißstation 100 ist eine Prüfstation 107 angeordnet, die die richtige Position der auf das Trägerband 104 aufgeschweißten Kontaktelemente 103A, 103B oder 103C prüft.

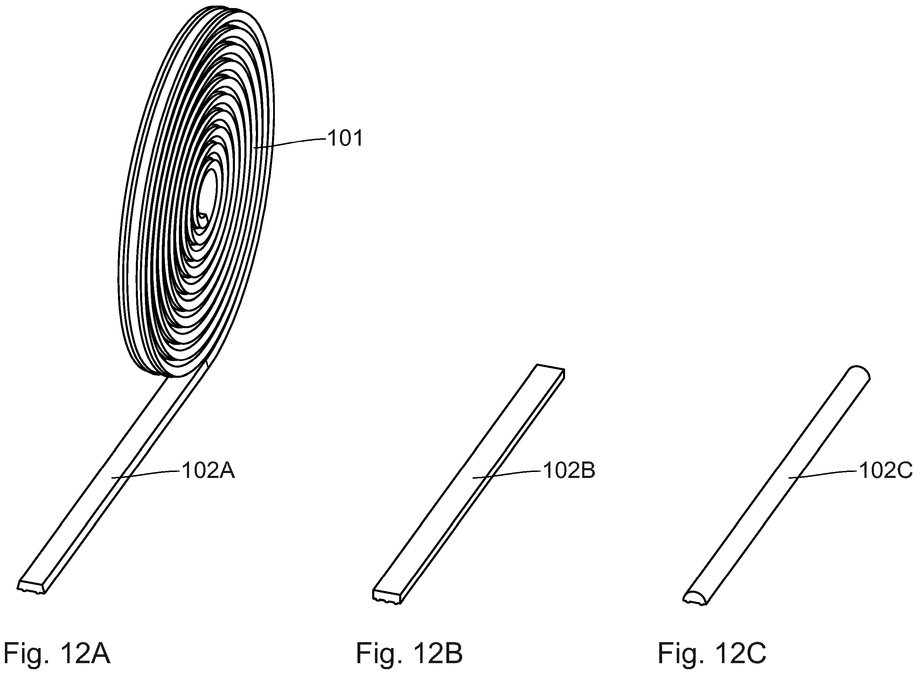

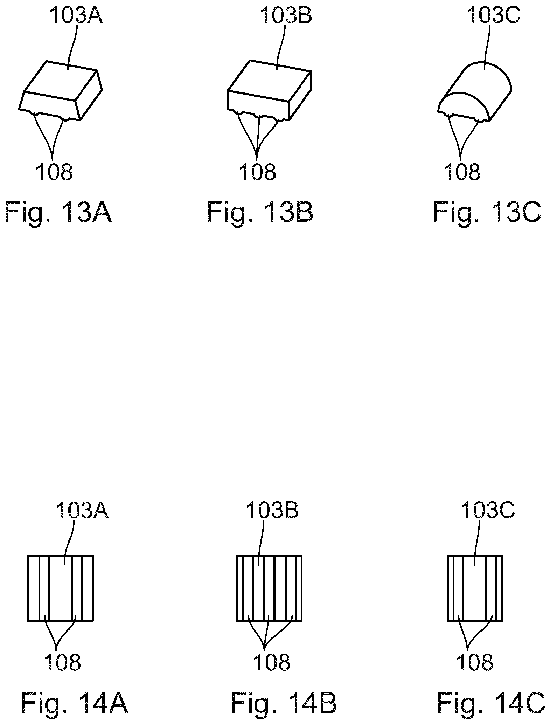

Wie aus den Fig. 12 bis 14 deutlich wird, weisen die unterschiedlichen Kontaktelemente 103A, 103B, 103C eine unterschiedliche, an ihre jeweilige Einsatzbedingungen angepasste Querschnittsprofilierung auf. So sind die Kontaktelemente 103A gemäß den Fig. 13A und 14A im Soll-Querschnitt trapezförmig ausgebildet und auf ihrer Unterseite mit zwei als parallele Längsstege ausgeformte Schweißwarzen 108 als Soll-Schweißwarzengeometrie versehen. Die Kontaktelemente 103B gemäß den Fig. 13B und 14B weisen einen flach-rechteckförmigen Querschnitt als Soll-Querschnitt mit drei als parallele Längsstege ausgeformten Schweißwarzen 108 als Soll-Schweißwarzengeometrie auf. Die Kontaktelemente 103C gemäß den Fig. 13C und 14C wiederum sind im Querschnitt halbkreisförmig ausgebildet und weisen eine Schweißwarzen-Profilierung analog den Kontaktelementen 103A mit zwei parallelen Stegen auf. Für jede dieser unterschiedlichen Soll-Konfigurationen von Kontaktelementen 103A, 103B, 103C müssen im Querschnitt entsprechende, unterschiedliche Kontaktbänder 102A, 102B, 102C verwendet werden, wie sie in den Fig. 12a, 12B und 12C dargestellt sind. Dies bedeutet, dass bei jedem Typenwechsel der Kontaktelemente 103A, 103B, 103C die entsprechende Vorratsrolle 101 ausgetauscht werden muss. Das gesamte Verfahren und die entsprechende Vorrichtung ist somit typenbezogen und nicht flexibel aufgebaut, um verschiedene Typen von Kontaktelementen 103A, 103B, 103C in einer Industrie-4.0-tauglichen Variabilität zu produzieren. Darüber hinaus bietet das bekannte Verfahren keine Möglichkeit zur Vor-, Be- und Nachbearbeitung von Kontaktelementen 103A, 103B, 103C zur Verbesserung deren Schweißung und der Geometrie-Maßhaltigkeit.

Davon ausgehend liegt der Erfindung die Aufgabe zugrunde, ein Verfahren zur Herstellung von Kontaktelementen für elektrische Kontakte aus einem Endlos-Kontaktband anzugeben, mit dessen Hilfe solche Kontaktelemente flexibler, kostengünstiger und präziser herstellbar sind.

Diese Aufgabe wird durch ein Verfahren mit den kennzeichnenden Merkmalen des Patentanspruches 1 Bei dem erfindungsgemäßen Verfahren wird im Unterschied zum Stand der Technik von einem einheitlichen Endlos-Band mit einer praktisch beliebigen Grundform ausgegangen, welches Band also vom Soll-Querschnitt, der Soll-Form und/oder der Soll-Schweißwarzengeometrie abweicht. Das Ausgangs-Kontaktband ist also universell und muss nicht für unterschiedliche Typen von Kontaktelementen ausgewechselt werden. Die Anpassung des jeweiligen Kontaktelementes an die gewünschte Konfiguration betreffend Soll-Querschnitt, Soll-Form und/oder Soll-Schweißwarzengeometrie erfolgt durch das Abschneiden eines entsprechenden Bandstückes vom Endlos-Band und dessen Umformen in diese Konfiguration.

Diese beiden Herstellungsschritte können in einer ersten Alternative in einem Arbeitsgang erfolgen, wodurch die Geometrie, die Parallelität und Planheit der oberen und unteren Seite des Kontaktelementes und die Formgebung der Schweißwarzengeometrie sich in einem Produktionsschritt ergeben. Durch einfaches und schnelles Auswechseln des Obermessers der kombinierten Schneid-Umform-Einrichtung können sehr kostengünstig und schnell Anpassungen bei der Geometrie des Kontaktelementes vorgenommen werden. Durch genauso einfaches und schnelles Auswechseln der unteren Matrize des Präge-Teiles der Schneid-Umform-Einrichtung können Geometrie und Form der Schweißwarzen an der Unterseite des Kontaktelementes auf einfache Weise flexibel in die gewünschte Soll-Schweißwarzengeometrie gebracht werden.

Gemäß der Erfindung erfolgen das Abschneiden des Bandstückes vom Endlos-Band in einem ersten Arbeitsschritt und das Umformen des Bandstückes in das Kontaktelement mit dem Soll-Querschnitt, der Soll-Form und/oder der Soll-Schweißwarzengeometrie einem nachfolgenden, zweiten Arbeitsschritt. Im ersten Arbeitsgang wird also das Ausgangsmaterial auf die richtige Länge zugeschnitten, wonach im zweiten Arbeitsgang die so gebildeten Bandstücke in die gewünschte Konfiguration von Soll-Querschnitt, Soll-Form und/oder Soll-Schweißwarzengeometrie geprägt wird. Diese bevorzugte Ausführungsform weist den großen Vorteil auf, dass ein vergleichsweise größerer Umformgrad erzielbar ist, sodass die Variabilität der erzielbaren Geometrien inklusive Parallelität, Planheit und Schweißwarzengeometrie der einzelnen Kontaktelemente mit einer noch geringeren Auswahl von Ausgangsmaterialien für das Endlos-Band erreicht wird.

So kann in einer bevorzugten Ausführungsform des erfindungsgemäßen Herstellungsverfahrens als Endlos-Band sogar ein Runddraht eingesetzt werden, der durch das Umformen in zumindest einem Teilquerschnitt mit einem polygonalen Soll-Querschnitt und/oder einer polygonalen Sollformer versehen werden kann. Damit kann vom denkbar einfachsten und damit kostengünstigsten Ausgangsmaterial in Form eben eines Runddrahts bei der Umsetzung des erfindungsgemäßen Herstellungsverfahrens ausgegangen werden.

Wie bereits oben erwähnt, können die Kontaktelemente beim Abschneiden und/oder Umformen durch auswechselbare Schneid-Präge-Werkzeuge mit einem entsprechenden Soll-Querschnitt, Soll-Form und/oder Soll-Schweißwarzengeometrie versehen werden. Vorzugsweise kann dabei eine spezifizierte Geometriequalität, insbesondere was Parallelität und Planheit der Oberfläche der Kontaktelemente anbetrifft, hergestellt werden.

Gemäß der Erfindung im Zusammenhang mit der getrennten Zuschneidung und Umformung des Endlos-Bandes in die entsprechenden Kontaktelemente kann beim Umformen des abgeschnittenen Bandstückes eine Fügefolie, also insbesondere eine schweiß- oder lötbare Folie, darauf aufgebracht werden. Dementsprechend ist es also möglich, in dem zweiten Arbeitsgang ohne zusätzlichen weiteren Fertigungsschritt ein komplettes Kontaktelement mit Fügefolie in besonders rationeller Weise herzustellen. Entsprechend ergeben sich große Kosteneinsparungen und Verkürzungen bei den Lieferzeiten, da das erfindungsgemäße Verfahren nur noch sehr wenige verschiedene Ausgangsmaterialien in Form von Endlos-Bändern aus Rundoder Flachdraht benötigt, die dann in beliebige Geometrien mit entsprechendem Soll-Querschnitt, Soll-Form und/oder Soll-Schweißwarzengeometrie gebracht werden können.

Ein weiterer Aspekt der vorliegenden Erfindung betrifft eine Vorrichtung zur Herstellung von Kontaktelementen gemäss Anspruch 7.

Mithilfe einer derartigen Vorrichtung ist das erfindungsgemäße Verfahren umsetzbar, wie dies zur Vermeidung von unnötigen Wiederholungen in der Beschreibung des entsprechenden Ausführungsbeispiels im Folgenden näher erläutert ist.

Bei einer Integration der Schneid- und Umformeinrichtung in eine gemeinsame Schneid-Präge-Presse ist die oben erwähnte, erste Alternative des Herstellungsverfahrens mit einem einzigen Arbeitsgang für diese beiden Bearbeitungsschritte in rationeller Weise realisierbar. Dabei kommen auswechselbare Werkzeuge, nämlich insbesondere ein auswechselbares Obermesser und eine auswechselbare Prägematrize zum Einsatz.

Gemäß der Erfindung ist eine Zuführeinrichtung für die Fügefolie vorgesehen sein, mit deren Hilfe die Fügefolie in die Umformeinrichtung eingebracht und dort in einem Arbeitsgang an die j eweiligen Kontaktelemente beispielsweise durch Kaltverschweißen angeheftet werden kann.

Um die hergestellten Kontaktelemente kontrolliert und rationell von der Umformeinrichtung zur Fügeeinrichtung zu verbringen, können vorteilhafter Weise entsprechende Werkstückträger vorgesehen sein.

In einer weiteren bevorzugten Ausführungsform kann die erfindungsgemäße Herstellvorrichtung in eine Rundtischanlage integriert sein, bei der die Kontaktelemente in den vorgenannten Werkstückträgern zwischen verschiedenen Stationen transportierbar sind. Insbesondere können dadurch sowohl eine erfindungsgemäße Herstellvorrichtung, als auch solche nach dem Stand der Technik in einer komplexeren Anlage kombiniert werden, um jedweden Produktionsvorgaben in optimaler Weise gerecht werden zu können.

Weitere Merkmale, Einzelheiten und Vorteile der Erfindung ergeben sich aus der nachfolgenden Beschreibung von Ausführungsbeispielen anhand der beigefügten Zeichnungen. Es zeigen:
- Fig. 1: eine schematische Darstellung einer Rundtischanlage mit mehreren Herstellungsvorrichtungen für Kontaktelemente,
- Fig. 2: eine perspektivische Darstellung einer Vorratsrolle mit einem Universal-Endlos-Band,
- Fig. 3A-C: perspektivische Darstellungen von Kontaktelementen in unterschiedlichen Soll-Gestaltungen,
- Fig. 4A-C: Ansichten der Unterseiten der Kontaktelemente gemäß den Fig. 3A-C,
- Fig. 5A-E: Ansichten der Unterseiten von Kontaktelementen in der weiteren Ausführungsformen der Soll-Schweißwarzengeometrie,
- Fig. 6A und B: perspektivische Darstellungen von Vorratsrollen mit dem Universal-Endlos-Band gemäß Fig. 2 und einem Universal-Endlos-Band in Form eines Runddrahtes,
- Fig. 7A und B: perspektivische Darstellungen von Bandstücken hergestellt aus den Universal-Endlos-Bändern gemäß Fig. 6A und B,
- Fig. 8A-E: perspektivische Ansichten (A-D) einzelner Abschnitte einer Fügefolie sowie eine perspektivische Ansicht (E) einer Vorratsrolle eines Endlos-Folienbandes,
- Fig. 9A-D: perspektivische Darstellungen von Kontaktelementen in unterschiedlichen Soll-Gestaltungen,
- Fig. 10A-D: Querschnittsdarstellungen der Kontaktelemente gemäß Fig. 9A-D mit angehefteter Fügefolie,
- Fig. 11: eine schematische Darstellung einer Herstellungsvorrichtung für Kontaktelemente nach dem Stand der Technik,
- Fig. 12A-C: eine perspektivische Darstellung (A) einer Vorratsrolle in einer ersten Querschnittkonfiguration des Endlos-Bandes bzw. perspektivische Darstellungen (B und C) von Abschnitten des Endlos-Bandes in zwei weiteren Querschnittskonfigurationen jeweils nach dem Stand der Technik,
- Fig. 13A-C: perspektivische Darstellungen von nach dem Stand der Technik hergestellten Kontaktelementen in unterschiedlichen Soll-Gestaltungen, sowie
- Fig. 14A-C: Ansichten der Unterseiten der Kontaktelemente gemäß Figur 13A-C.

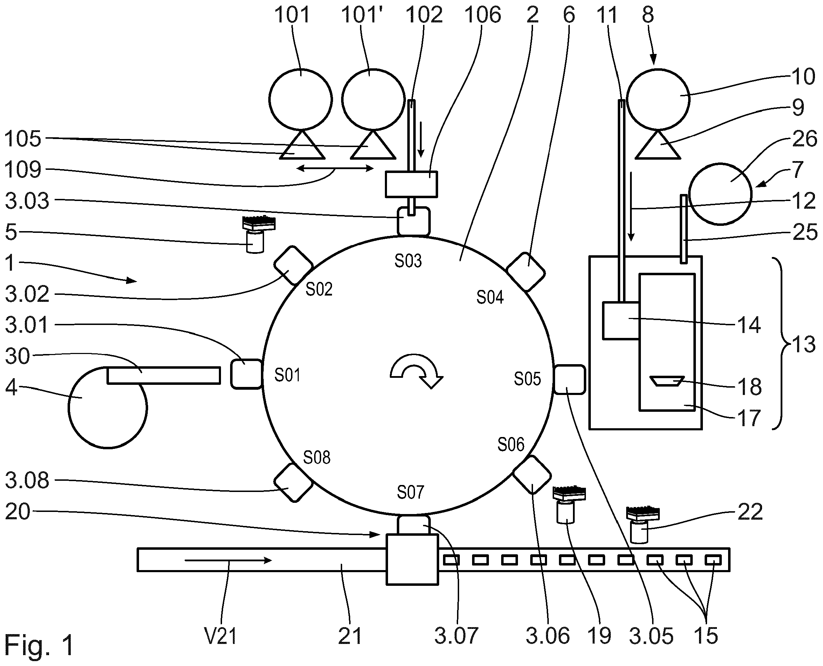

Die in Fig. 1 gezeigte Rundtischanlage 1 weist einen zentralen Rundtisch 2 auf, an dem verschiedene Stationen S01 bis S08 vorhanden sind. Der Transport jeglicher Kontaktelemente wird dabei durch Werkstückträger 3 am zentralen Rundtisch 2 vorgenommen, die an den jeweiligen Stationen S01 bis S08 entsprechend dem gewünschten Produktionsverlauf positionierbar sind.

Bei der Station S01 ist eine Zuführung 30 für nicht nähere dargestellte, beispielsweise aus einem pulvermetallurgischen Material bestehende Einzelkontakte aus einem Magazin 4 zu dem Werkstückträger 3.01 vorgesehen.

Bei der Rundtischstation S02 ist eine optische Kontrolleinrichtung 5 angeordnet, die die in dem Werkstückträger 3.02 aufgenommenen Einzelkontakte, wie sie über die Station S01 zugeführt wurden, einer entsprechenden Kontrolle auf Einhaltung entsprechender Soll-Parameter unterzieht.

Bei der Rundtischposition S03 ist eine aus dem Stand der Technik bekannte Schneidstation mit einer Schneidvorrichtung 106 vorgesehen, wie sie in ihrem Aufbau und Funktion eingangs der Beschreibung anhand der Fig. 11 bis 14 bereits erläutert wurde. Zur Vermeidung von Wiederholungen kann darauf verwiesen werden. Es ist lediglich zu ergänzen, dass dieser Station zwei Vorratsrollen 101, 101' mit typenbezogenen Kontaktbändern, wie beispielsweise den in Fig. 12A und B gezeigten Kontaktbändern 102A und 102B, zugeordnet sind, die über einen Verschiebeschlitten 109 nach Bedarf wechselweise angedockt werden können. Die einzelnen Kontaktelemente 103A oder 103B werden in der Schneidvorrichtung 106 von den entsprechenden Kontaktbändern 102A oder 102B abgeschnitten und dem dortigen Werkstückträger 3.03 übergeben. Das Aufbringen auf das Trägerband findet - wie später noch näher erläutert wird - bei der Rundtischstation S07 statt.

Für die vorstehend erwähnten, nach dem Stand der Technik hergestellten Kontaktelemente ist bei der Rundtischstation S04 ein Finisher 6 zum Nacharbeiten dieser Kontaktelemente, beispielsweise zum Prägen und/oder Planen und/oder Nachbessern deren Abscherkante vorgesehen.

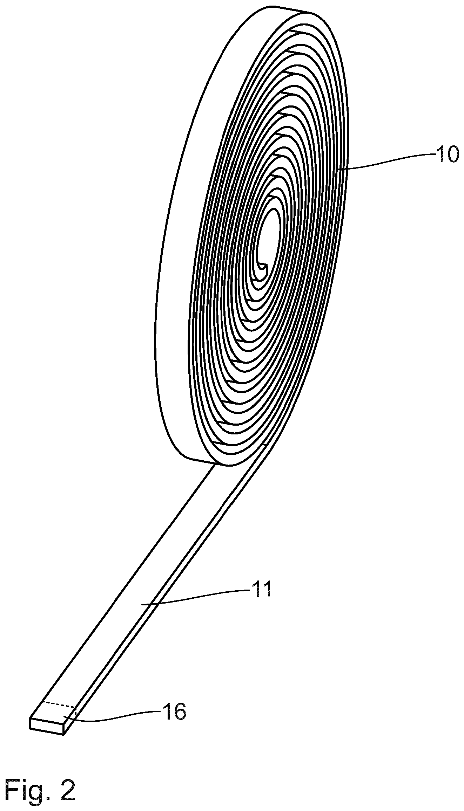

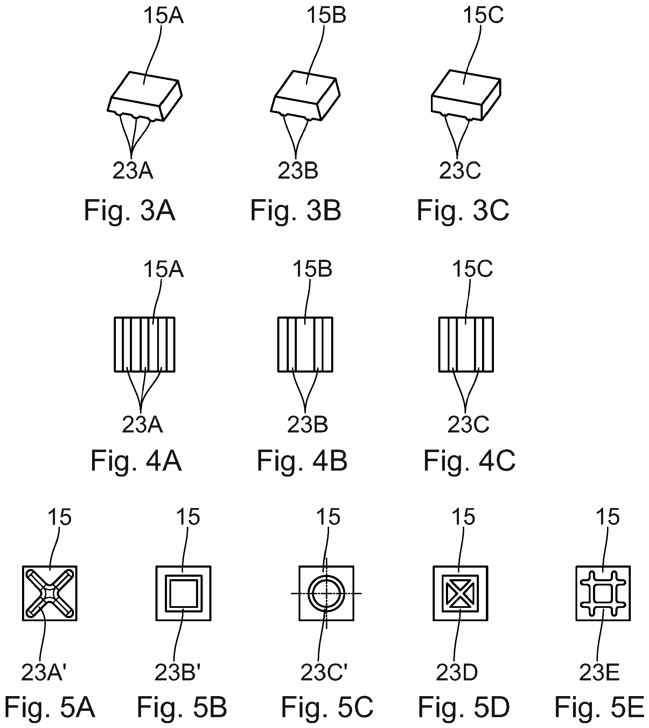

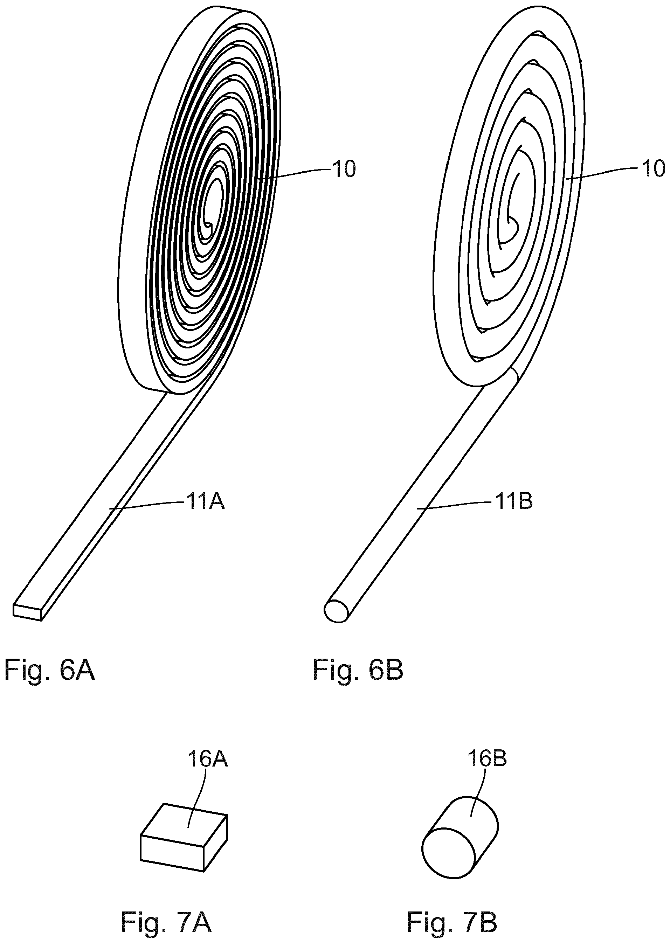

Die eigentliche Erfindung ist bei der Rundtischstation S05 implementiert. Zur Durchführung der später anhand der Fig. 2 bis 10 noch detaillierter zu erläuternden Herstellungsvarianten für Kontaktelemente ist in Fig. 1 die als Ganzes mit 7 bezeichnete Herstellungsvorrichtungen vorgesehen. Diese weist eine Vorratseinrichtung 8 auf, in deren Abhaspelvorrichtung 9 eine Vorratsspule 10 mit einem im Querschnitt beispielsweise flach-rechteckigen Endlos-Band 11 (Fig. 2) gelagert ist. Mithilfe einer Zuführeinrichtung 12 wird das Endlos-Band 11 in eine kombinierte Schneid-Präge-Presse 13 eingeführt, wo mithilfe einer Schneideinrichtung 14 mit auswechselbarem Schneidmesser vom Endlos-Band 11 jeweils ein später das eigentliche Kontaktelement 15 (Fig. 3 bis 5) bildendes Bandstück 16 (Fig. 2 und 7) abgelängt wird. Ferner ist in der Schneid-Präge-Presse 13 eine Umformeinrichtung 17 in Form einer Prägepresse vorgesehen, die mit einer auswechselbaren Prägematrize 18 in ihrem Gesenk ausgerüstet ist. Damit wird das jeweilige Bandstück 16 in das "veredelte" Kontaktelement 15 umgeformt, wie im Folgenden noch anhand der Fig. 3 bis 10 näher erläutert wird.

Die so bearbeiteten Kontaktelemente 15 werden dann wieder in den jeweiligen Werkstückträger 3.05 übergeben, der in der nächsten Rundtischstation S06 wieder an einer optischen Kontrolleinrichtung 19 zur Überprüfung der Kontaktelemente 15 vorbeigefahren wird. Dort kann auch eine (nicht dargestellte) Beölung der Kontaktelemente 15 stattfinden.

Bei der Rundtischstation S07 ist eine Fügeeinrichtung 20 in Form einer Kontaktschweißstation vorgesehen, der die Kontaktelemente 15 übergeben werden. Letztere werden dort in üblicher Weise auf ein Trägerband 21 aufgeschweißt, das die Kontaktelemente 15 in Vorschubrichtung V21 des Trägerbandes 21 an einer weiteren Kontrolleinrichtung 22 zu Überprüfung der korrekten Schweißposition der Kontaktelemente 15 auf dem Trägerband 21 vorbeiführt.

Der Vollständigkeit halber ist noch die Rundtischstation S08 zu erwähnen, in der eine Ausschleusung von für nicht in Ordnung befundenen Kontaktelementen stattfindet.

Anhand der Fig. 2 bis 5 ist nun eine erste Alternative eines erfindungsgemäßen Herstellungsverfahrens zu erläutern, wie es in der Herstellungsvorrichtung 7 realisiert wird. So wird das Endlos-Band 11 mit seinem flach-rechteckigen Querschnitt (Fig. 2) in einer Querschnittsform bereitgestellt, die vom späteren Soll-Querschnitt und der Soll-Schweißwarzengeometrie abweicht. In dieser Darstellung ist am vorlaufenden Ende des Endlos Bandes 11 gestrichelt das in der kombinierte Schneid-Präge-Presse 13 abgelängte und gleichzeitig in das entsprechende Kontaktelement 15 umgeformte Bandstück 16 angedeutet. Das Bandstück 16 wird abgeschnitten und gleichzeitig in das jeweilige Kontaktelement 15 mit seiner Soll-Form, Soll-Schweißwarzengeometrie und Soll-Querschnitt durch Verwendung einer jeweils passenden Prägematrize 18 umgeformt. So ist in Fig. 3A und 4A ein Kontaktelement 15A mit einem trapezförmigen Querschnitt und drei parallelen, stegförmigen Schweißwarzen 23A dargestellt. Die Variante gemäß Fig. 3B und 4B sieht zwei parallele, stegförmige Schweißwarzen 23B und einen ebenfalls trapezförmigen Querschnitt des Kontaktelementes 15B vor. In Fig. 3C und 4C wiederum ist ein Kontaktelemente 15C mit einem flach-rechteckigen Querschnitt und zwei parallelen, stegförmigen Schweißwarzen 23C gezeigt.

Durch Verwendung unterschiedlicher Prägematrizen 18 können praktisch beliebige Schweißwarzengeometrien an den Kontaktelementen 15 angebracht werden, wie dies in Fig. 5 dargestellt ist. So zeigt Fig. 5A eine Schweißwarze 23A` in Diagonalkreuz-Form, Fig. 5B eine Viereck-Schweißwarze 23B`, Fig. 5C eine Kreis- Schweißwarze 23C`, Fig. 5D eine kombinierte Viereck-Diagonalkreuz- Schweißwarze 23D und Fig. 5E eine Art rautenförmige Schweißwarze 23E. Allen Kontaktelementen 15 ist gemeinsam, dass ihre Soll-Gestalt durch die Prägung nicht nur bezüglich der Schweißwarzengeometrie, sondern auch was Parallelität, Winkeltreue und Planheit der Begrenzungsflächen betrifft, engtolerant eingestellt sind.

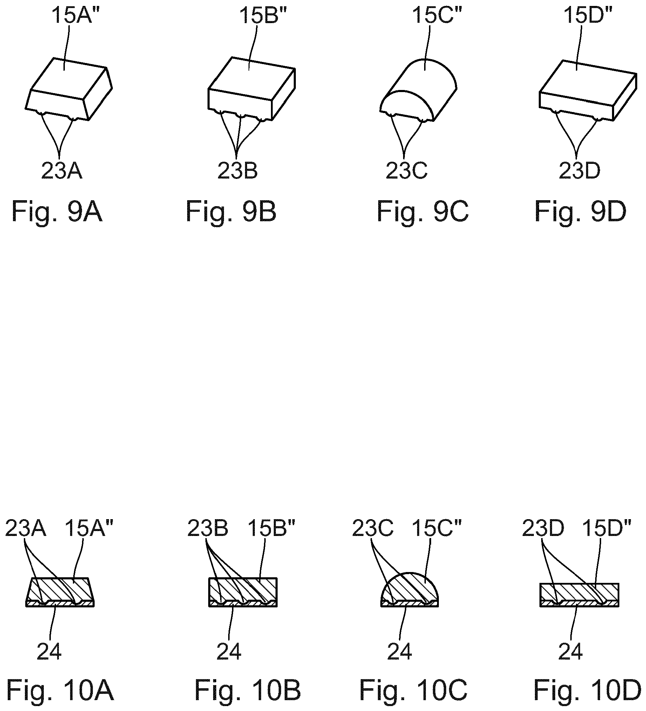

Eine alternative Herstellungsvariante ist anhand der Fig. 6 bis 10 zu erläutern. Hier wird nicht mit einer kombinierten Schneid-Präge-Presse 13, sondern einer getrennten Schneideinrichtung 14 und Umformeinrichtung 17 gearbeitet, sodass von einem Endlos-Band 11 zuerst das entsprechende Bandstück 16 abgelängt wird. So zeigen Fig. 6A und 7A ein Endlos-Band 11A mit flach-rechteckigem Querschnitt, von dem ein Bandstück 16A mit quaderförmiger Gestalt abgelängt wird. Dies kann in der Umformeinrichtung 17 wiederum in ein Kontaktelement 15A" mit trapezförmigem Querschnitt und zwei stegförmigen, parallelen Schweißwarzen 23A (Fig. 9A) oder ein Kontaktelement 15B" mit flach-rechteckigem Querschnitt und drei stegförmigen, parallelen Schweißwarzen 23B (Fig. 9B) umgeformt werden.

Aufgrund der getrennten Schneid- 14 und Umformeinrichtung 17 ist ein höherer Umformungsgrad bei der Herstellung der Kontaktelemente realisierbar, sodass sogar von einem Endlos-Band 11B in Form eines Runddrahtes ausgegangen werden kann (Figur 6B). Dieses wird in der Schneideinrichtung 14 wieder entsprechend abgelängt, um zylindrische Bandstücke 16B zu bilden. Diese können in der anschließenden Umformeinrichtung 17 durch Auswählen einer entsprechenden Prägematrize 18 so umgeformt werden, dass aus dem runden Querschnitt einer teilweise polygonaler Soll-Querschnitt entsteht, wie beispielsweise das Kontaktelement 15C" mit halbkreisförmigem Querschnitt und wiederum zwei stegförmigen, parallelen Schweißwarzen 23C (Fig. 9C). Genauso ist die Herstellung eines im Querschnitt flach-rechteckigen Kontaktelementes 15D" mit zwei stegförmigen, parallelen Schweißwarzen 23D aus dem Runddraht möglich (Fig. 9D).

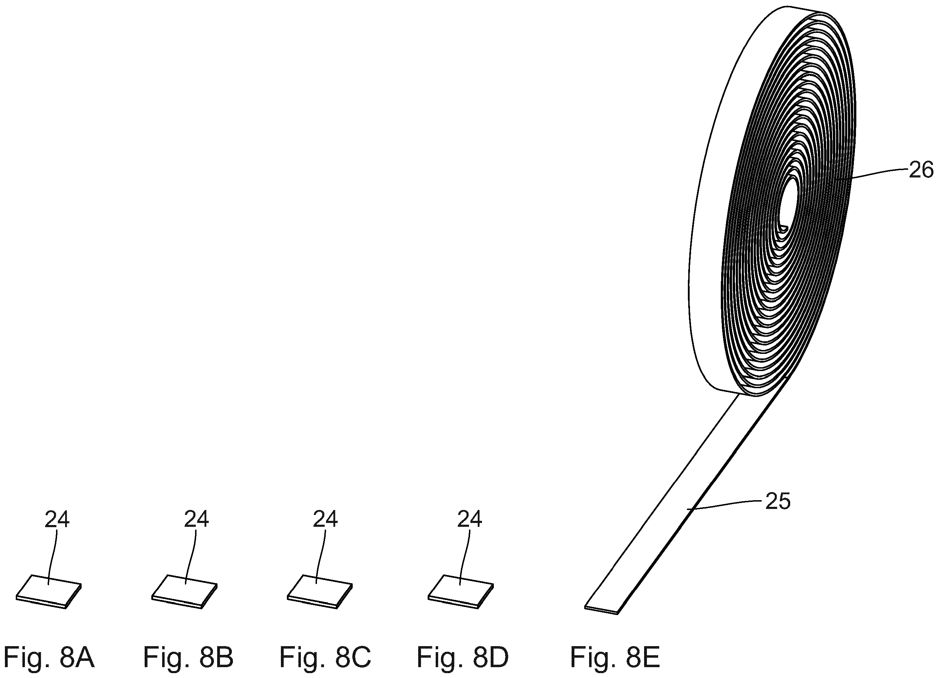

Mit der Umformung der Bandstücke 16 gemäß den Fig. 9A-D kann gleichzeitig eine schweiß- oder lötbare Fügefolie 24 aus einem entsprechenden Endlos-Folienband 25 den Kontaktelementen 15A"-15D" zugeordnet werden. Das in Fig. 1 und 8E gezeigte Endlos-Folienband 25 wird dazu von einer Vorratsrolle 26 abgezogen und in der Schneideinrichtung 14 oder der Umformeinrichtung 17 entsprechend abgelängt, um die in Fig. 8A-D dargestellten Stücke der Fügefolie 24 zu bilden. Diese werden zusammen mit den jeweiligen Bandstücken 16 in die Umformeinrichtung 17 mit eingelegt und beim Umformen durch Kaltverschweißen an den Schweißwarzen 23A-23D der Kontaktelemente 15A"-15D" angebracht, wie dies in Fig. 10A-D gezeigt ist. Hierbei ist zu ergänzen, dass - wie nicht eigens dargestellt ist - die lötbare Fügefolie 24 auch an Kontaktelementen gänzlich ohne irgendwelche Schweißwarzen angebracht werden kann.

## Patentansprüche

1. Verfahren zur Herstellung von Kontaktelementen für elektrische Kontakte aus einem Endlos-Kontaktband, welche Kontaktelemente (15) einen Soll-Querschnitt, Soll-Form und/oder eine Soll-Schweißwarzengeometrie aufweisen, mit folgenden Verfahrensschritten:
- Bereitstellen eines Endlos-Bandes (11) mit vom Soll-Querschnitt, Soll-Form und/oder von der Soll-Schweißwarzengeometrie abweichender Grundform,
- Abschneiden eines das Kontaktelement bildenden Bandstückes (16) vom Endlos-Band (11) und Umformen des Bandstückes (16) in das Kontaktelement (15) mit dem Soll-Querschnitt, der Soll-Form und/oder der Soll-Schweißwarzengeometrie, und
- Aufbringen des Kontaktelementes (15) auf ein Trägerband (21), wobei das Abschneiden des Bandstückes (16) vom Endlos-Band (11) in einem ersten Arbeitsschritt und dass Umformen des Bandstückes (16) in das Kontaktelement (15) mit dem Soll-Querschnitt, der Soll-Form und/oder der Soll-Schweißwarzengeometrie einem nachfolgenden, zweiten Arbeitsschritt erfolgen,
**dadurch gekennzeichnet, dass** beim Umformen des Bandstückes (16) eine Fügefolie (24), insbesondere schweiß- oder lötbare Folie, darauf aufgebracht wird.

2. Verfahren nach Anspruch 1, **dadurch gekennzeichnet, dass** das Abschneiden und Umformen in einem Arbeitsgang erfolgen.

3. Verfahren nach Anspruch 1 oder 2, **dadurch gekennzeichnet, dass** beim getrennten Abschneiden und Umformen als Endlos-Band (11) ein Runddraht verwendet wird, der durch das Umformen in zumindest einem Teilquerschnitt mit einem polygonalen Soll-Querschnitt und/oder einer polygonalen Soll-Form versehen wird.

4. Verfahren nach einem der vorgenannten Ansprüche, **dadurch gekennzeichnet, dass** die Kontaktelemente (15) beim Abschneiden und Umformen durch auswechselbare Schneid-Präge-Werkzeuge mit dem Soll-Querschnitt, der Soll-Form und/oder der Soll-Schweißwarzengeometrie versehen werden.

5. Verfahren nach einem der vorgenannten Ansprüche, **dadurch gekennzeichnet, dass** die Kontaktelemente (15) durch das Abschneiden und/oder Umformen mit spezifizierter Geometriequalität, insbesondere Parallelität und Planheit ihrer Oberflächen, hergestellt werden.

6. Verfahren nach einem der vorgenannten Ansprüche, **dadurch gekennzeichnet, dass** die Fügefolie (24) von einem Endlos-Folienband (25) zugeführt und vor oder mit dem Umformen des Bandstückes (16) in das Kontaktelement (15) vom Endlos-Folienband (25) abgelängt und am Kontaktelement (15) vorzugsweise durch Kaltverschweißen angeheftet wird.

7. Vorrichtung zur Herstellung von Kontaktelementen mittels eines Verfahrens nach einem oder mehreren der vorgenannten Ansprüche, umfassend
- eine Vorrats- (8) und Zuführeinrichtung (12) für das Endlos-Band (11),
- eine Schneideinrichtung (14) mit auswechselbarem Schneidmesser zum Abschneiden des das Kontaktelement (15) bildenden Bandstückes (16) vom Endlos-Band (11) ,
- eine Umformeinrichtung (17) mit auswechselbarem Umformwerkzeug zum Umformen des Bandstückes (16) in das Kontaktelement (15) mit dem Soll-Querschnitt, der Soll-Form und/oder der Soll-Schweißwarzengeometrie, und
- eine Fügeeinrichtung (20) zum Aufbringen des Kontaktelementes (15) auf ein Trägerband (21),
**gekennzeichnet durch** eine Zuführeinrichtung für eine Fügefolie (24), insbesondere die schweiß- oder lötbare Folie, zum Zuführen der Fügefolie (24) in die Umformeinrichtung (17).

8. Vorrichtung nach Anspruch 7, **dadurch gekennzeichnet, dass** die Schneideinrichtung (14) und Umformeinrichtung (17) gemeinsam durch eine Schneid-Präge-Presse (13) mit auswechselbaren Werkzeugen, insbesondere auswechselbarem Obermesser und auswechselbarer Prägematrize (18), gebildet sind.

9. Vorrichtung nach Anspruch 7 oder 8, **gekennzeichnet durch** Werkstückträger (3) zur Überführung der Kontaktelemente (15) von der Umformeinrichtung (17) zur Fügeeinrichtung (20).

10. Vorrichtung nach Anspruch 9, **gekennzeichnet durch** die Integration in eine Rundtischanlage (1), bei der die Kontaktelemente (15) in den Werkstückträgern (3) zwischen den Stationen (S01 bis S08) transportiert werden.

## Claims

1. Method for the production of contact elements for electrical contacts from an endless contact strip, which contact elements (15) have a nominal cross-section, a nominal shape and/or a nominal welding nipple geometry, having the following method steps:
- providing an endless strip (11) with a basic shape deviating from the nominal cross-section, nominal shape and/or nominal welding nipple geometry,
- cutting a strip piece (16) forming the contact element from the endless strip (11) and forming the strip piece (16) into the contact element (15) having the nominal cross-section, the nominal shape and/or the nominal welding nipple geometry, and
- applying the contact element (15) to a carrier strip (21), wherein the cutting of the strip piece (16) from the endless strip (11) takes place in a first working step and the forming of the strip piece (16) into the contact element (15) with the nominal cross-section, the nominal shape and/or the nominal welding geometry takes place in a subsequent, second working step,
**characterized in that** a joining foil (24), in particular a weldable or solderable foil, is applied to the strip piece (16) during forming.

2. Method according to claim 1, **characterized in that** the cutting and forming are carried out in one operation.

3. Method according to claim 1 or 2, **characterized in that** during the separate cutting and forming, the endless strip (11) used is a round wire which is provided with a polygonal nominal cross-section and/or a polygonal nominal shape by the forming in at least one partial cross-section.

4. Method according to any one of the preceding claims, **characterized in that** the contact elements (15) are provided with the nominal cross-section, the nominal shape and/or the nominal welding nipple geometry during cutting and forming by means of exchangeable cutting-embossing tools.

5. Method according to any one of the preceding claims, **characterized in that** the contact elements (15) are produced by cutting and/or forming with specified geometrical quality, in particular parallelism and flatness of their surfaces.

6. Method according to any one of the preceding claims, **characterized in that** the joining foil (24) is fed from an endless foil strip (25) and is cut to length from the endless foil strip (25) before or with the forming of the strip piece (16) into the contact element (15) and is attached to the contact element (15) preferably by cold welding.

7. Apparatus for the production of contact elements by means of a method according to one or more of the preceding claims, comprising
- a stock (8) and feeding device (12) for the endless strip (11),
- a cutting device (14) with an exchangeable cutting blade for cutting the strip piece (16) forming the contact element (15) from the endless strip (11),
- a forming device (17) with exchangeable forming tool for forming the strip piece (16) into the contact element (15) having the nominal cross-section, the nominal shape and/or the nominal welding nipple geometry, and
- a joining device (20) for applying the contact element (15) to a carrier strip (21),
**characterized by** a feeding device for a joining foil (24), in particular the weldable or solderable foil, for feeding the joining foil (24) into the forming device (17).

8. Apparatus according to claim 7, **characterized in that** the cutting device (14) and forming device (17) are jointly formed by a cutting-embossing press (13) with exchangeable tools, in particular exchangeable upper blade and exchangeable embossing die (18).

9. Apparatus according to claim 7 or 8, **characterized by** workpiece carriers (3) for transferring the contact elements (15) from the forming device (17) to the joining device (20).

10. Apparatus according to claim 9, **characterized by** integration into a rotary table system (1), in which the contact elements (15) are transported in the workpiece carriers (3) between the stations (S01 to S08).

## Revendications

1. Procédé de fabrication d'éléments de contact pour des contacts électriques à partir d'une bande de contact sans fin, lesquels éléments de contact (15) présentent une section transversale de consigne, une forme de consigne et/ou une géométrie de consigne de bossage de soudure, comprenant les étapes de procédé suivantes :
- mise à disposition d'une bande sans fin (11) dont la forme de base diffère de la section transversale de consigne, de la forme de consigne et/ou de la géométrie de consigne de bossage de soudure,
- découpe d'un morceau de bande (16) formant l'élément de contact à partir de la bande sans fin (11) et la transformation du morceau de bande (16) en l'élément de contact (15) avec la section transversale de consigne, la forme de consigne et/ou la géométrie de consigne de bossage de soudure, et
- application de l'élément de contact (15) sur une bande de support (21), la découpe du morceau de bande (16) de la bande sans fin (11) étant effectuée dans une première étape de travail et la transformation du morceau de bande (16) en l'élément de contact (15) avec la section transversale de consigne, la forme de consigne et/ou la géométrie de consigne de bossage de soudure étant effectuée dans une deuxième étape de travail suivante,
**caractérisé en ce que,** lors du formage du morceau de bande (16), une feuille d'assemblage (24), en particulier une feuille pouvant être soudée ou brasée, est appliquée sur celui-ci.

2. Procédé selon la revendication 1, **caractérisé en ce que** la découpe et le formage sont effectués en une seule opération.

3. Procédé selon la revendication 1 ou 2, **caractérisé en ce que,** lors de la découpe et du formage séparés, on utilise comme bande sans fin (11) un fil rond qui, par le formage, est pourvu dans au moins une section partielle d'une section transversale de consigne polygonale et/ou d'une forme de consigne polygonale.

4. Procédé selon l'une quelconque des revendications précédentes, **caractérisé en ce que** les éléments de contact (15) sont pourvus de la section transversale de consigne, de la forme de consigne et/ou de la géométrie de consigne de bossage de soudure lors de la découpe et du formage par des outils de découpe et d'estampage interchangeables.

5. Procédé selon l'une quelconque des revendications précédentes, **caractérisé en ce que** les éléments de contact (15) sont réalisés par découpe et/ou formage avec une qualité géométrique spécifiée, en particulier le parallélisme et la planéité de leurs surfaces.

6. Procédé selon l'une quelconque des revendications précédentes, **caractérisé en ce que** la feuille d'assemblage (24) est amenée par une bande de feuille sans fin (25) et est coupé à la longueur de la bande de feuille sans fin (25) avant ou avec la transformation du morceau de bande (16) en l'élément de contact (15) et est fixé à l'élément de contact (15), de préférence par soudage à froid.

7. Dispositif pour la fabrication d'éléments de contact au moyen d'un procédé selon une ou plusieurs des revendications précédentes, comprenant
- une installation de réserve (8) et d'alimentation (12) pour la bande sans fin (11),
- une installation de découpe (14) avec une lame de coupe interchangeable pour couper le morceau de bande (16) formant l'élément de contact (15) de la bande sans fin (11),
- une installation de formage (17) avec un outil de formage interchangeable pour transformer le morceau de bande (16) en l'élément de contact (15) avec la section transversale de consigne, la forme de consigne et/ou la géométrie de consigne de bossage de soudure, et
- une installation d'assemblage (20) pour appliquer l'élément de contact (15) sur une bande de support (21),
**caractérisé par** une installation d'alimentation pour une feuille d'assemblage (24), en particulier la feuille pouvant être soudée ou brasée, pour amener la feuille d'assemblage (24) dans l'installation de formage (17).

8. Dispositif selon la revendication 7, **caractérisé en ce que** l'installation de découpe (14) et l'installation de formage (17) sont formées conjointement par une presse de découpe et de gaufrage (13) avec des outils interchangeables, en particulier une lame supérieure interchangeable et une matrice de gaufrage interchangeable (18).

9. Dispositif selon l'une quelconque des revendications 7 ou 8, **caractérisé par** des porte-pièces (3) pour transférer les éléments de contact (15) de l'installation de formage (17) à l'installation d'assemblage (20).

10. Dispositif selon la revendication 9, **caractérisé par** l'intégration dans un système à plateau circulaire (1), dans lequel les éléments de contact (15) sont transportés dans les porte-pièces (3) entre les stations (S01 à S08).
